# EUROPÄISCHE PATENTANMELDUNG

(11) **EP 0 527 262 A1**
(43) Veröffentlichungstag der Anmeldung: **17.02.1993**
(21) Anmeldenummer: 91119224.3
(22) Anmeldetag: 12.11.1991
(51) Int. Cl.: G02B 23/18, G02B 23/02, G02B 25/00

(54) **Fernglas mit aufsteckbarer Zusatzlinse für Okular**

(30) Priorität: 09.08.1991 DE 4126288
(71) Anmelder: BRESSER OPTIK GmbH & Co. KG, D-46325 Borken (DE)
(72) Erfinder: Byung, Sun Kim, W-4280 Borken (DE)
(74) Vertreter: Herrmann-Trentepohl, Werner, Dipl.-Ing.

(57) **Zusammenfassung**

Bei einem Fernglas, insbesondere Prismenglas (1), welches eine veränderliche Vergrößerung durch Beeinflussung seiner Okulare (4, 5) aufweist, ist die Erfindung dadurch gekennzeichnet, daß mit den Linsensystemen der Okulare (4, 5) eine feste Vergrößerung als Basisvergrößerung vorgesehen ist und zur Beeinflussung der Okulare (4, 5) Okularmodule (40, 41) dienen, welche jeweils aus einem Linsensystem (42, 43) bestehen, dessen Körper von außen unter gleichzeitiger Veränderung der Position des Okularlinsensystems (24) in eine einer vorgegebenen Erhöhung der Vergrößerung zugeordnete Stellung in der Tiefe des Okulartubus (37) auswechselbar einzusetzen ist.

## Beschreibung

Die Erfindung betrifft ein Fernglas, insbesondere ein Prismaglas nach dem Oberbegriff des Anspruches 1.

Prismengläser unterscheiden sich von terrestischen Fernrohren durch ihre bauliche Verkürzung. Das erfindungsgemäße Fernglas weist im übrigen die bekannten Baugruppen auf. Dazu gehört u.a. eine Scharfeinstellung, die beispielsweise in Form eines Mitteltriebes zur Verstellung beider Okularauszüge oder auch einer an einer oder an beiden Okularen vorgesehenen Dioptrieneinstellung verwirklicht sein kann. Das erfindungsgemäße Fernglas weist vorzugsweise beide Einrichtungen auf, was den Vorteil hat, daß Brillenträger, welche bei Benutzung des Fernglases ihre Brille nicht aufsetzen, mit Hilfe der Dioptrieneinstellung ihre Brille ersetzen können.

Solche Ferngläser haben bei den bekannten Bauformen eine vorgegebene Vergrößerung, die häufig sechs-, sieben-, acht- oder zehnfach ist. Der Benutzer stellt ein solches Fernglas unter Berücksichtigung seiner Tiefenschärfe auf eine bestimmte große Entfernung ein, die beispielsweise 150 m beträgt. Er verändert dann die Dioptrieneinstellung, bis er ein scharfes Bild erhält. Er kann dann durch Verdrehen des Mitteltriebe alle Schärfenbereiche ohne Brillenbenutzung erreichen. Allerdings kann er die Vergrößerung bei solchen Ferngläsern nicht ändern.

Es sind allerdings auch Ferngläser der einschlägigen Art bekannt, welche dem Benutzer eine Änderung der Vergrößerung gestatten. Dazu gehört eine Bauform, welche bei den durch Drehen eines unterschiedliche Okulare tragenden Revolverkopfes wahlweise die den beiden Binokularen des Fernglases zugeordneten Okulare wechselt und dadurch die Vergrößerung ändert. Da man jeweils das gesamte Linsensystem jedes Okulars ändern muß, ergibt sich ein erheblicher technischer Aufwand für die Optik des Fernglases. Außerdem entstehen von der üblichen Bauform abweichende, ungewöhnliche Formgebungen, die häufig als störend empfunden werden.

Eine andere Möglichkeit der wahlweisen Änderung der Vergrößerung durch den Benutzer bieten sogenannte Zoom-Ferngläser. Hierbei besteht das Okularsystem aus mehreren Linsen und einer Handhabe, mit der sich eine Linse oder ein Linsenpaar in dem jeweiligen Linsensystem verstellen läßt, wodurch sich die Vergrößerung des Fernglases ändert. Im allgemeinen ist jedoch die Qualität des Bildes verschlechtert, wenn man sie mit den eingangs bezeichneten Ferngläsern vergleicht, die eine feste Vergrößerung aufweisen.

Der Erfindung liegt die Aufgabe zugrunde, auf einfache Weise ein Fernglas der eingangs beschriebenen Art zu schaffen, welches dem Benutzer die Möglichkeit verschafft, problemlos die Vergrößerung des Glases zu wählen, ohne daß eine vom Üblichen abweichende Bauform erforderlich wird oder sich die Bildqualität wesentlich verschlechtert.

Diese Aufgabe löst die Erfindung mit den Merkmalen des Anspruches 1. Weitere Merkmale der Erfindung sind Gegenstand der Unteransprüche.

Gemäß der Erfindung wird ein Fernglas mit fester Basisvergrößerung gewählt, das die eingangs beschriebenen Möglichkeiten für den Benutzer bietet. Durch die Okularmodule wird ohne Auswechseln der Okularsysteme oder ihrer Veränderung durch Verstellung einzelner oder mehrerer Linsen die jeweils gewünschte Erhöhung der Vergrößerung gegenüber der Basisvergrößerung des Glases erreicht. Diese Okularmodule werden von außen in den jeweiligen Okulartubus der Okularauszüge eingesetzt, wodurch sich die Linsensysteme der Okulare in den Binokularen verschieben. Das erfolgt so, daß dabei das gesamte Okularlinsensystem in eine exakte vorgewählte Position gebracht wird, so daß die genaue Positionierung des Okularlinsensystems im Zusammenwirken mit dem jeweils gewählten Okularmodul die diesem zugeordnete höhere Vergrößerung ergibt.

Die Erfindung hat den Vorteil, daß der Benutzer sich ein gängiges Fernglas mit fester, d.h. vorgegebener Vergrößerung beschaffen und durch Zukauf eines oder mehrerer Paare von Okularmodulen dessen Vergrößerung schrittweise erhöhen kann. Das Fernglas läßt sich dann auch bei erhöhter Vergrößerung konventionell wie eingangs beschrieben benutzen und einstellen. Es kann die übliche Bauform aufweisen. Da die Okularmodule auswechselbar sind, kann der Benutzer jederzeit von einer erhöhten Vergrößerung auch auf eine andere Vergrößerung, darunter auch die Basisvergrößerung durch Entfernen der eingesetzten Module zurückkehren. Die Qualität des Bildes des läßt sich in allen Fällen im wesentlichen unverändert beibehalten.

Die Merkmale des Anspruches 2 ermöglichen die vorstehend beschriebene Erhöhung der Vergrößerung des Fernglases in mehreren Stufen und sind daher besonders für Benutzer geeignet, welche entsprechende Anforderungen an das Fernglas stellen.

Eine zweckmäßige praktische Ausführungsform des erfindungsgemäßen Fernglases beschreibt der Anspruch 3. Die dort vorgesehene federnde Lagerung des Okularlinsensystems im Tubus hat den Vorteil, daß die für die bei den verschiedenen Vergrößerungen vorgesehenen Positionen des Okularlinsensystems exakt eingenommen werden, ohne daß der Benutzer dem besondere Aufmerksamkeit zuwenden müßte. Wenn er nämlich einen bestimmten Okularmodul einsetzt, verschiebt er das Okularlinsensystem um eine durch die Länge des Moduls vorgegebene Entfernung im Okulartubus, weil die Feder die beiden Linsensysteme zusammenhält und zwar auch dann, wenn der Bajonettverschluß betätigt worden ist. Wird dieser wieder gelöst, bewegt die Feder den Modul wieder nach außen und wirft ihn aus, wodurch die ursprüngliche Position des Okularlinsensystems automatisch wiederhergestellt wird.

Zweckmäßig verwirklicht man diese Ausführungsform der Erfindung auch mit den Merkmalen des Anspruches 4. Die Verwendung einer Wendelfeder ermöglicht es nämlich, die federnde Abstützung außerhalb des Strahlenganges anzubringen, ohne daß merkliche Änderungen der Form des Fernglases erforderlich werden oder gar Verschlechterungen der Bildqualität in Kauf genommen werden müssen. Bei dieser Ausführungsform dienen die Okularauszüge nicht nur zur Fixierung der Linsensysteme von Okular und Modul, sondern auch zu deren Führung, wodurch eine verklemmungsfreie Bewegung der Linsensysteme bei allen Änderungen der Vergrößerung gewährleistet wird.

Die Einzelheiten, weiteren Merkmale und andere Vorteile der Erfindung ergeben sich aus der nachfolgenden Beschreibung einer Ausführungsform anhand der Figuren in der Zeichnung; es zeigen
- Fig. 1: in drei Schnittdarstellungen verschiedene Okularlinsensysteme für unterschiedliche Basisvergrößerungen, die fest eingestellt sind,
- Fig. 2: das erfindungsgemäße Fernglas in einer Ansicht, wobei zwei Okularmodule außerhalb des Fernglases dargestellt sind,
- Fig. 3: die drei Vergrößerungen des Fernglases nach Fig. 2, wobei das Einsetzen der Okularmodule wiedergegeben ist und
- Fig. 4: den Aufbau eines Okularlinsensystems, das in der erfindungsgemäßen Ausführungsform nach den Fig. 2 und 3 Verwendung findet.

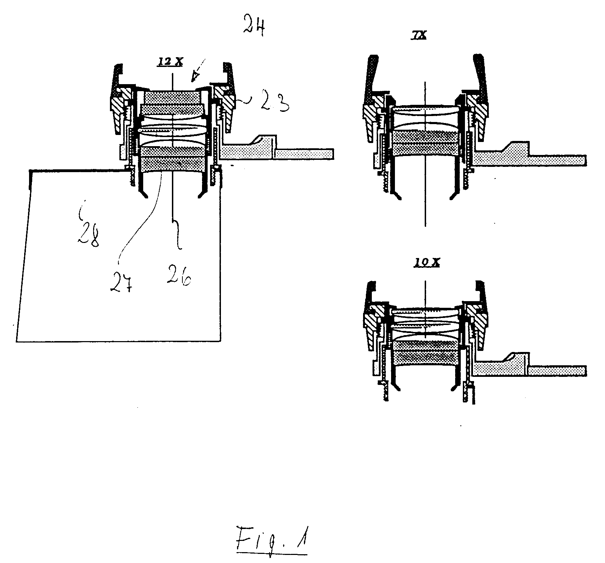

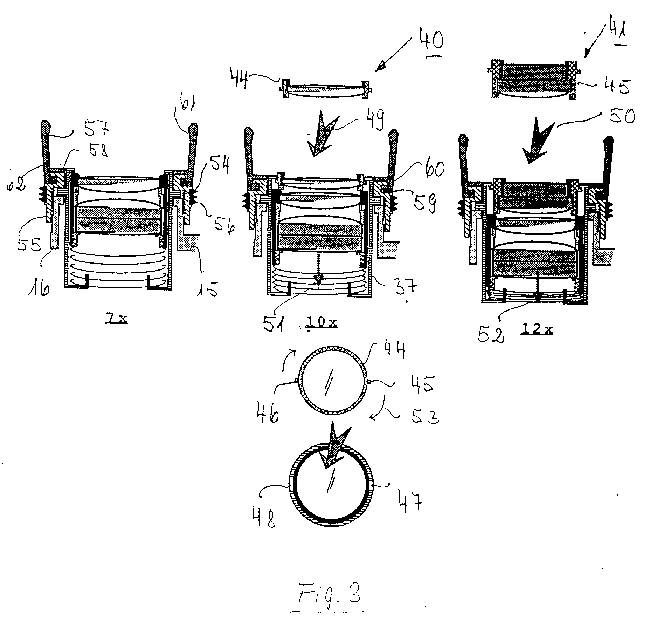

Gemäß der Darstellung der Fig. 1 ist das erfindungsgemäße Fernglas (1) ein Prismenglas, bei dem der Abstand der beiden Objektive (2, 3) größer als der Abstand der beiden Okulare (4, 5) ist. Die beiden Prismengehäuse (6, 7) tragen auf ihren Abschlußplatten (10, 11) die auf diesen befestigten Okularführungsrohre (8, 9). In der optischen Mittelachse ist ein Mitteltrieb (12) vorgesehen, der über eine Spindel (13) und über eine Okularbrücke (15) mit Hilfe rohrförmiger Aufnahmen (16) (Fig. 3) auf je einen Tubus (17) wirkt, der das Okularlinsensystem (18) aufnimmt. Die beiden Prismengehäuse (6, 7) sind durch eine Knickbrücke miteinander verbunden, deren Scharnierbänder (19-22) ebenfalls in der optischen Mittelachse gelenkig miteinander verbunden sind.

Mit Hilfe eines Dioptrienringes (23) läßt sich an jedem Okular eine Scharfeinstellung vornehmen.

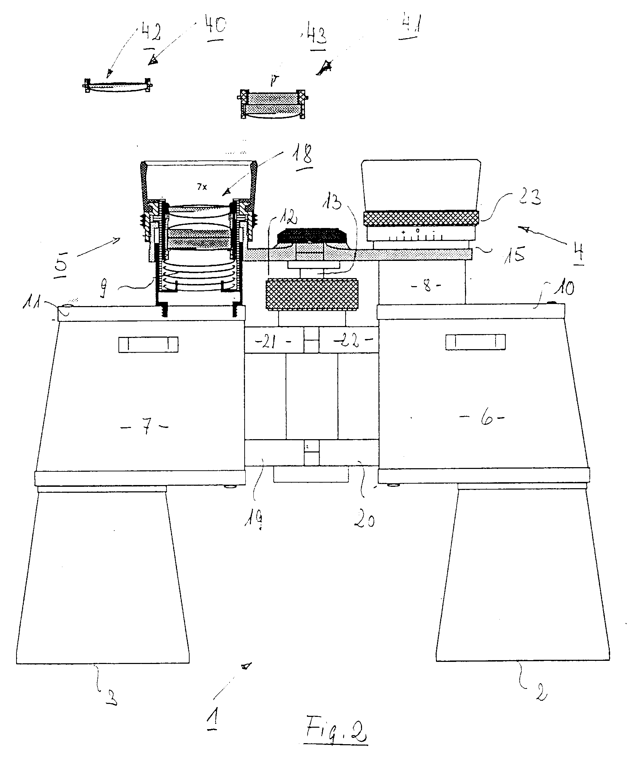

In der Darstellung der Fig. 2 ist angenommen, daß das dargestellte Fernglas (1) eine siebenfache Vergrößerung aufweist, die fest eingestellt ist. In der Darstellung der Fig. 1 ist das siebenfach vergrößernde Okularlinsensystem im Vergleich mit Linsensystemen wiedergegeben, die eine zehn- oder eine zwölffache Vergrößerung herbeiführen. In allen Fällen handelt es sich hierbei um eine fest eingestellte Vergrößerung, die als Basisvergrößerung im erfindungsgemäßen Fernglas (1) Verwendung findet.

Bei der Zwölffachvergrößerung wird mit Hilfe des Dioptrienringes (23) eine Linsenkombination (24) in der optischen Achse (26) des Gesamtsystems verstellt. Hierbei sind der Achromat (27) gegenüber den üblichen Linsensystemen nach oben und die Feldlinse (28) nach oben versetzt. Diese Anordnung befindet sich bei dem erfindungsgemäßen Fernglas in sämtlichen Vergrößerungsstufen, die sich im übrigen nur durch die Art der beweglichen Linsen voneinander unterscheiden. Das Fernglas hat somit einen hohen Okularbrennpunkt.

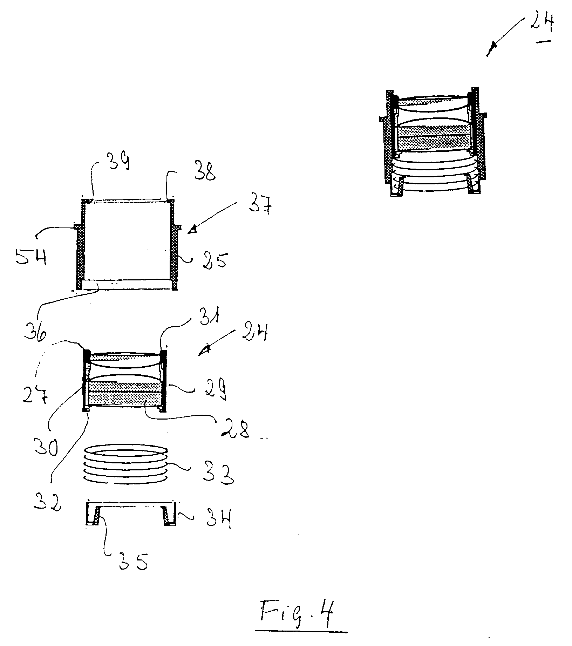

Das Okularlinsensystem in der Basisausführung des Fernglases (1) mit siebenfacher Vergrößerung ist in Fig. 4 im zusammengebauten Zustand und in auseinandergezogener Ansicht wiedergegeben. Danach wird in einem Okulartubus (25) das Linsensystem (24) geführt. Die Linsen (27 und 28) sind in einem aus einem Rohrabschnitt (29) bestehenden Träger fest eingebaut und werden mit einem Zwischenzylinder (30) auf Abstand gehalten. Die beiden Endflansche (31, 32) dienen zur Abstützung der Enden einer Wendelfeder (33), für die ein Stützring (34) vorgesehen ist, der einen eingezogenen Flansch (35) zur Umschließung des unteren Endes der Spiralfeder aufweist. Der Stützring (34) sitzt in der Ausdrehung (36) des Okulartubus (37). Dieser weist einen oberen Abschlußflansch (38) auf, auf dem sich der obere Flansch (31) des Rohrabschnittes (29) abstützt, wenn die Teile gemäß der rechten oberen Darstellung der Fig. 4 fertig montiert sind. In diesem Fall stützt sich der Rohrabschnitt (29) und damit das Okularlinsensystem auf der Wendelfeder (33) ab und wird von dieser gegen die innere Ringfläche (39) des Flansches (38) am Tubus (37) gedrückt. Andererseits kann durch Druck auf das System (24) die Feder (33) gespannt und damit das System (24) im Tubus nach unten verschoben werden.

In der aus der linken oberen Darstellung der Fig. 3, der mittleren Darstellung der Fig. 1 und der Wiedergabe der Fig. 2 hervorgehenden Stellung des Okularsystems ist eine siebenfache Vergrößerung eingestellt, die der Benutzer nicht ohne weiteres ändern kann, weil sie vom Werk vorgegeben wird.

Dem Benutzer werden jedoch zum Fernglas (1) passende Okularmodule (40 und 41) geliefert. Im Ausführungsbeispiel handelt es sich um zwei Okularmodule, mit denen gemäß den beiden Darstellungen in Fig. 3 aus der siebenfachen Vergrößerung die Vergrößerung des Fernglases (1) auf eine zehnfache bzw. zwölffache Vergrößerung umgestellt werden kann. Der Modul (40) für die zehnfache Vergrößerung hat eine bikonvexe Linse (42), während der Modul (41) einen Achromaten (43) aufweist.

Gemeinsam ist den Modulen (40 und 41) ein Ring (44), welcher die Linsen der Linsenmodule (41, 42) umschließt. Dieser Ring hat diametrale Nocken (45, 46), welche durch Aussparungen (47, 48) des Tubusflansches (38) passen. Wie am Beispiel der beiden rechten oberen Darstellungen der Fig. 3 erkennbar ist, lassen sich die Modulen (40 und 41) von oben in den Tubus (37) einsetzen, sobald die Nocken (45, 46) mit den Aussparungen (47, 48) im Flansch (38) eingeführt werden. Dies zeigen die Pfeile (49 und 50). Beim Einführen der Nocken (45, 46) in die Aussparungen (47, 48) wird das gesamte Linsensystem (24) des Okulars axial, d.h. in Richtung der Pfeile (51, 52) nach unten gedrückt, wobei sich die Wendelfeder (33) weiter spannt. Das Maß der Verschiebung des Systems (24) ist durch die axiale Länge der Ringe (44 bzw. 45) gegeben, die deshalb unterschiedlich ist.

Nachdem die Nocken (45, 46) durch die Aussparungen (47, 48) nach unten ausgetreten sind, läßt sich durch eine leichte Drehung gemäß den Pfeilen (53) in der linken unteren Darstellung der Fig. 3 der betreffende Modul (40 bzw. 41) verriegeln. Die Linsensysteme des Moduls und des Okulars sind dadurch in den vorgegebenen Abständen fixiert. Auf umgekehrtem Weg können die Modulen (40 und 41) aus den Tuben entfernt werden. Dann kehrt das System (24) unter Rückstellung durch die Wendelfeder (33) automatisch in seine Ausgangsstellung zurück.

Es versteht sich, daß die in den Figuren für das linke Okular (5) dargestellte Anordnung auch für das rechte Okular vorgesehen ist.

Beim Zusammenbau der Teile wird der Okulartubus mit seinem mittleren Ringflansch (54) zwischen dem Rohransatz (16) und einem profilierten Ring (55) eingespannt, der sich auf einem Außengewinde des Rohransatzes (16) mit einem Innengewinde verdrehen läßt. Der Profilring trägt einen äußeren, vorzugsweise geriffelten Gummiring (56), welcher die Dioptrieneinstellung ermöglicht. Das obere Ende des Profilrings (55) trägt die Augenmuschel (57), die sich mit einem Innenflansch (58) auf dem Profilring abstützt und einem Endflansch (59) in einer Ringnut (60) des Profilringes hält. Das obere verdickte Ende (61) der Augenmuschel läßt sich nach außen klappen und legt sich dem unteren Abschnitt (62) von außen an, wodurch der Tubusflansch besser zugänglich wird. Das Glas kann daher auch mit und ohne Augenmuschel verwendet werden.

## Patentansprüche

1. Fernglas, insbesondere Prismenglas, welches eine veränderliche Vergrößerung durch Beeinflussung seiner Okulare aufweist, dadurch gekennzeichnet, daß mit den Linsensystemen (24) der Okulare (4, 5) eine feste Vergrößerung als Basisvergrößerung vorgesehen ist und zur Beeinflussung der Okulare (4, 5) Okularmodule (41, 42) dienen, welche jeweils aus einem Linsensystem (42, 43) bestehen, dessen Körper von außen unter gleichzeitiger Veränderung der Position des Okularlinsensystems (24) in eine einer vorgegebenen Erhöhung der Vergrößerung zugeordnete Stellung in der Tiefe des Okulartubus (37) auswechselbar einzusetzen ist.

2. Fernglas nach Anspruch 1, dadurch gekennzeichnet, daß das Linsensystem (42, 43) der Okularmodule (40, 41) je nach Vergrößerung mindestens aus einer bikonvexen Linse oder einem Achromat besteht und an einem Linsenhalter (44) untergebracht ist, dessen axiale Länge der dem jeweiligen Okularmodul (40, 41) zugeordneten Stellung des Okularlinsensystems (24) entspricht.

3. Fernglas nach einem der Ansprüche 1 oder 2, dadurch gekennzeichnet, daß das Okularlinsensystem (24) federnd im Okulartubus (37) gelagert und am Tubusende (39) abgestützt ist, und daß die Okularmodule (40, 41) mit Hilfe eines Bajonettverschlusses (45, 46; 47, 48) durch Drehung mit dem Okulartubus (37) ver- oder entriegelbar sind.

4. Fernglas nach einem der Ansprüche 1 bis 3, dadurch gekennzeichnet, daß die federnde Abstützung des Okularlinsensystems (24) aus einer Wendelfeder (33) besteht, die sich auf einem Ring (34) des Okulartubus (37) abstützt und das in einem im Okulartubus (37) verschieblichen Rohrabschnitt (29) untergebrachte Linsensystem unterstützt.

5. Fernglas nach einem der Ansprüche 1 bis 4, dadurch gekennzeichnet, daß der Bajonettverschluß aus diametralen Nocken (45, 46) der Linsenhalter (44) der Okularmodule (40, 41) und diesen entsprechenden Aussparungen (47, 48) eines oberen Endflansches (38) des Okulartubus (37) besteht, wobei die Wendelfeder (33) nach der Bajonettdrehung den Okularmodul (40, 41) auf der inneren Ringfläche (39) des Okulartubusflansches (38) hält bzw. aus dem Okulartubus (37) auswirft.

6. Fernglas nach einem der Ansprüche 1 bis 5, dadurch gekennzeichnet, daß der Okulartubus (37) mit einem äußeren Ringansatz (54) und einem profilierten Stellring (55) gehalten ist, der zur Dioptrieneinstellung dient.

7. Fernglas nach einem der Ansprüche 1 bis 6, dadurch gekennzeichnet, daß der Dioptrienstellring (55) einen profilierten Außenring (54, 56) als Handhabe und eine Augenmuschel (57) trägt, welche sich mit einem Innenflansch (58) auf der Stirnseite des Profilrings (55) abstützt und in einer äußeren Ringnut (59) mit einem Innenflansch (60) gehalten ist.

8. Fernglas nach einem der Ansprüche 1 bis 7, dadurch gekennzeichnet, daß das Okularsystem (24) einen nach oben versetzten Achromat (28) und eine nach unten versetzte Feldlinse (27) aufweist.
